# EUROPEAN PATENT APPLICATION

(11) **EP 4 178 168 A1**
(43) Date of publication of application: **10.05.2023**
(21) Application number: 21820989.8
(22) Date of filing: 08.06.2021
(51) Int. Cl.: H04L 29/08

(54) **DATA COLLECTION METHOD AND NETWORK ELEMENT MANAGER**

(30) Priority: 08.06.2020 CN 202010512670
(71) Applicant: ZTE Corporation, Shenzhen, Guangdong 518057 (CN)
(72) Inventor: ZHU, Xijun, Shenzhen, Guangdong 518057 (CN)
(74) Representative: Vossius & Partner Patentanwälte Rechtsanwälte mbB
(86) International application number: PCT/CN2021/098898
(87) International publication number: WO 2021/249394

(57) **Abstract**

Provides is a data collection method, applicable to a network element manager and including: receiving a first subscription request from a first subscription end being used for subscribing to first data, and the first data is specific data within a future first time period; determining whether there is a coincident collection task currently, data requested to be collected by the coincident collection task including at least the first data; if there is a coincident collection task, acquiring a data stream according to the coincident collection task, acquiring the first data from the data stream, and sending the first data to the first subscription end; and if there is no coincident collection task, generating a first collection task according to the first subscription request, the first collection task being used for requesting to collect the first data, acquiring a data stream according to at least the first collection task, acquiring the first data from the data stream, and sending the first data to the first subscription end. Further provides is a network element manager.

## Description

### CROSS-REFERENCE TO RELATED APPLICATION

The present application claims priority to Chinese Patent Application NO.202010512670.7 filed on June 08, 2020, and the entire contents of which are herein incorporated by reference.

### FIELD

Embodiments of the present disclosure relate to the technical field of communication networks, and in particular, to a data collection method and a network element manager.

### BACKGROUND

A network manager (a network element manager, such as a wireless network manager) implements network management by analyzing data by means of different modules thereon, such as signaling data analysis, measurement data analysis, user tracking analysis, spectrum data analysis, and the like, and these data are collected from a network element.

When a certain module (a service module, that is, a subscription end) needs data, the module that needs data transmits a data collection task to a corresponding network element, such as an RNC (Radio Network Controller), an eNodeB (Evolved Node B), a gNB (5G base station), and the like, the network element collects data after receiving the collection task, and then reports the collected data to a corresponding module by means of different channels, such as a TCP (Transmission Control Protocol) channel, an FTP (File Transfer Protocol) channel, an SNMP (simple network management protocol) message, and the like, and the module further processes the data according to its own requirements after receiving the data.

By using the foregoing method to collect network element data, redundant bandwidths and operation resources are occupied, resulting in a waste of network resources.

### SUMMARY

In a first aspect, embodiments of the present disclosure provide a data collection module, applicable to a network element manager and including: receiving, from a first subscription end, a first subscription request being used for subscribing to first data, and the first data being specific data within a future first time period; determining whether there is a coincident collection task currently, data requested to be collected by the coincident collection task including at least the first data; in a case where there is a coincident collection task, acquiring a data stream according to the coincident collection task, acquiring the first data from the data stream, and sending the first data to the first subscription end; and in a case where there is no coincident collection task, generating a first collection task according to the first subscription request, the first collection task being used for requesting to collect the first data, acquiring a data stream according to at least the first collection task, acquiring the first data from the data stream, and sending the first data to the first subscription end.

In a second aspect, the embodiments of the present disclosure provide a network element manager, including: a receiving module, a first determination module, a first processing module and a second processing module.

The receiving module is configured to receive a first subscription request from a first subscription end. The first subscription request is used for subscribing to first data, and the first data is specific data within a future first time period.

The first determination module is configured to determine whether there is a coincident collection task currently. Data requested to be collected by the coincident collection task includes at least the first data.

The first processing module is configured to, when there is a coincident collection task, acquire a data stream according to the coincident collection task, acquire the first data from the data stream, and send the first data to the first subscription end.

The second processing module is configured to, when there is no coincident collection task, generate a first collection task according to the first subscription request, the first collection task being used for requesting to collect the first data, acquire a data stream according to at least the first collection task, acquire the first data from the data stream, and send the first data to the first subscription end.

### BRIEF DESCRIPTION OF THE DRAWINGS

In the drawings of the embodiments of the present disclosure:
Fig. 1 is a flow diagram of a data collection method provided in an embodiment of the present disclosure;
Fig. 2 is a flow diagram of some operations in the data collection method provided in an embodiment of the present disclosure;
Fig. 3 is a flow diagram of some operations in the data collection method provided in an embodiment of the present disclosure; and
Fig. 4 is a composition block diagram of a network element manager provided in an embodiment of the present disclosure.

### DETAILED DESCRIPTION OF EMBODIMENTS

In order to enable those skilled in the art to better understand the technical solutions of the embodiments of the present disclosure, the data collection method and the network element manager provided in the embodiments of the present disclosure will be described in detail below in combination with the drawings.

The embodiments of the present disclosure will be described more fully hereinafter with reference to the drawings, but the illustrated embodiments may be embodied in different forms, and the embodiments of the present disclosure should not be construed as being limited to the embodiments set forth in the present disclosure. The purpose of providing the illustrated embodiments is to make the present disclosure thorough and complete as much as possible and to enable those skilled in the art to fully understand the scope of the present disclosure.

The drawings of the embodiments of the present disclosure are used for providing a further understanding of the embodiments of the present disclosure, and constitute a part of the specification, are used for explaining the present disclosure together with the embodiments of the present disclosure, and do not constitute limitations to the present disclosure. The features and advantages of the embodiments of the present disclosure will become more apparent to those skilled in the art by means of describing detailed example embodiments with reference to the drawings.

The embodiments of the present disclosure may be described with reference to a plan view and/or a cross-sectional view by means of an ideal schematic diagram of the present disclosure. However, the example illustrations may be modified according to manufacturing techniques and/or tolerances.

In the case of no conflict, various embodiments of the present disclosure and the features in the embodiments may be combined with each other.

The terms used in the present disclosure are for the purpose of describing particular embodiments only and are not intended to limit the present disclosure. The term "and/or" as used in the present disclosure includes any and all combinations of one or more associated listed items. As used in the present disclosure, singular forms "a" and "the" are intended to include plural forms as well, unless the context clearly indicates otherwise. As used in the present disclosure, the terms "include", "made of" specify the presence of particular features, integers, steps, operations, elements and/or components, but do not preclude the presence or addition of one or more other features, integers, steps, operations, elements, components, and/or groups thereof.

Unless otherwise defined, all terms (including technical and scientific terms) used herein have the same meaning as commonly understood by those ordinary skilled in the art. It should also be understood that, terms such as those defined in common dictionaries should be construed as having meanings consistent with those in related arts and the background of the present disclosure, and will not be construed as having idealized or over-formal meanings, unless expressly so limited in the present disclosure.

The embodiments of the present disclosure are not limited to the embodiments shown in the drawings, but include embodiments in which configurations are modified on the basis of a manufacturing process. Accordingly, areas illustrated in the drawings have schematic attributes, and the shapes of the areas shown in the figures are not restrictive.

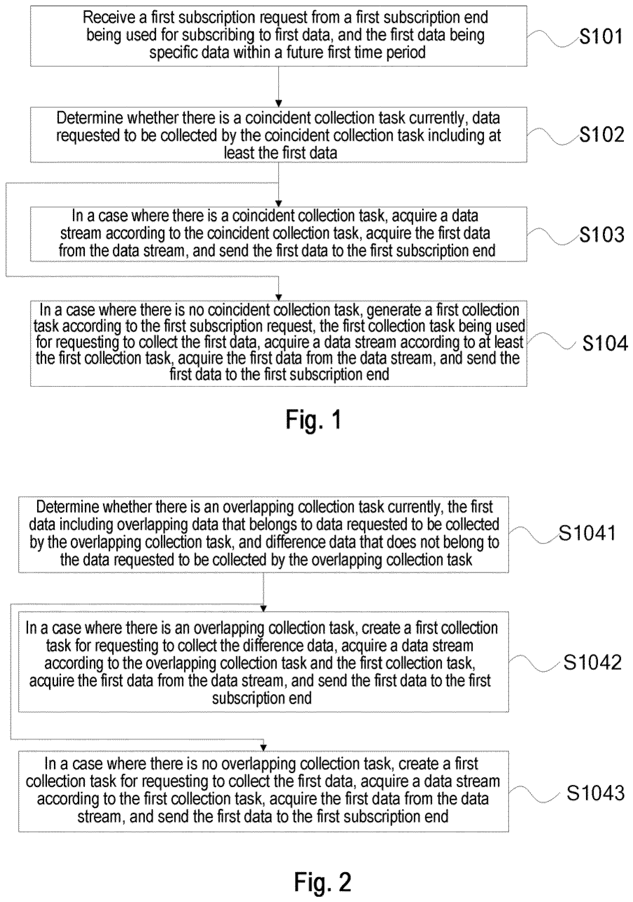

In a first aspect, referring to Fig. 1, the embodiments of the present disclosure provides a data collection method, which is applicable to a network element manager, and the method includes the following S101 to S104.

S101, a first subscription request is received from a first subscription end, the first subscription request is used for subscribing to first data, and the first data is specific data within a future first time period.

The network element manager receives a subscription request from a certain subscription end (i.e., a certain service module, such as a data analysis module), the subscription request is used for reserving certain data, and this data is specific data within a certain time period in the future, that is, data within a time period after the current time point. For example, the current time point is 10: 00, the subscription request only subscribes to data within a certain time period after 10: 00, for example, may subscribe to data between 10: 30 and 11: 00, and but cannot subscribe to data within a time period before 10: 00, for example, cannot subscribe to data between 9: 00 and 9: 30.

For ease of description, in the present specification, the subscription end is a first subscription end, the subscription request received by the network element manager from the first subscription end is a first subscription request, the first subscription request is used for subscribing to first data, and the first data is specific data within a future first time period.

That is to say, the currently received subscription request or the currently processed subscription request is the first subscription request, and the first subscription requests at different time points or in different processing processes are different subscription requests. Of course, the subscription end corresponding to the first subscription request is the first subscription end, which may be different at different time points or in different processing processes.

The first data refers to a specific type of data in a specific network element within a future specific time period (i.e., the first time period), for example, may be measurement report data, which meets a specific condition and has a serial number of 256 in a 5G base station.

For example, the first subscription request may include a list of subscription data, a type of subscription network element, a subscription range, a subscription object, a subscription type, a subscription element, a subscription parameter, and a subscription time period:

The list of subscription data is the serial number of a network element to which the subscribed data belongs, the serial number is an identifier of the network element, and different network elements of the same network element type have different serial numbers.

The type of subscription network element is the type of the network element to which the subscribed data belongs, such as RNC, eNodeB, gNB and the like, different network elements of different network element types may have the same serial number, for example, a network element of which the type is the RNC and the serial number is 256 is different from a network element of which the type is eNodeB and the serial number is 256.

The subscription range is the position of the network element where the subscribed data is located, such as the data of wireless module ID=1 or TDD cell ID=1 of the network element of which the type is the RNC and the serial number is 256, both the wireless module ID and the TDD cell ID are specific position parameters of the data, and the specific subscribed data may be determined by means of these position parameters.

The subscription object is the type of an object of the subscribed data, for example, a cell, a wireless device, and the like.

The subscription type is the type to which the subscribed data belongs, or the use of the data, for example, signaling data, measurement data, user tracking data, frequency spectrum data, drive test data, call detail tracking data, signaling soft mining data, performance data, and the like.

The subscription element is a specific parameter of the subscribed data, for example, port (S1/UU/X2).

The subscription parameter is a specific parameter of the subscribed data, for example, the parameter is a tracking depth, and the value is a maximum level.

The subscription time period is the first time period, which may only be a time period after the current time point.

S102, it is determined whether there is a coincident collection task currently, and the data requested to be collected by the coincident collection task includes at least the first data.

After receiving the first subscription request, the network element manager should establish a first collection task according to the first subscription request, and the first collection task is used for collecting the first data within the first time period. However, since the network element manager may also receive other subscription requests before receiving the first subscription request, the network element manager may have established many other collection tasks, and there may be a coincident collection task in these established collection tasks, that is, the data requested to be collected includes the collection task of the first data. Therefore, before the first collection task is established, it is determined whether there is a coincident collection task in the established collection tasks at first.

The data requested to be collected including the first data refers to that the data requested to be collected includes all data requested to be collected by the first subscription request, that is, the data requested to be collected by the coincident collection task at least includes specific data within the future first time period, which is requested to be collected in the first subscription request, and of course, the data requested to be collected by the coincident collection task may further include other data, which does not belong to the first data.

Whether there is the coincident collection task in the currently established collection tasks may be determined by means of determining whether there is a following collection task in the established collection tasks, the list of subscription data, the type of subscription network element, the subscription range, the subscription object, the subscription type, the subscription element, the subscription parameter and the subscription time period of the data requested to be collected by this collection task are completely consistent with the list of subscription data, the type of subscription network element, the subscription range, the subscription object, the subscription type, the subscription element, the subscription parameter and the subscription time period in the first subscription request, or, the ranges of the list of subscription data, the type of subscription network element, the subscription range, the subscription object, the subscription type, the subscription element, the subscription parameter and the subscription time period of the data requested to be collected by this collection task are greater than the ranges of the list of subscription data, the type of subscription network element, the subscription range, the subscription object, the subscription type, the subscription element, the subscription parameter and the subscription time period in the first subscription request.

Determining whether there is the coincident collection task in the currently established collection tasks may include the followings:
1. determining whether the subscription network element has been present, that is, determining the type of subscription network element and the list of subscription data, for example, determining whether there is a collection task of a network element of which the type is the RNC and the serial number is 256, if not, it indicates that there is no coincident collection task, and thus the following determination may be not continued;
2. determining whether the subscription range has been present, that is, further determining whether there is a collection task, which includes the subscription range in the first subscription request or has a subscription range consistent with the subscription range in the first subscription request, in the collection tasks of the subscription network element in the first subscription request, if not, it indicates that there is no coincident collection task, and thus the following determination may be not continued;
3. determining whether the subscription object has been present, that is, further determining whether there is a collection task, which has a subscription object consistent with the subscription object in the first subscription request or contains the subscription object in the first subscription request, in the collection tasks, which are determined in the previous two steps (i.e., the determination results of the previous two steps are both "presence/yes"), if not, it indicates that there is no coincident collection task, and thus the following determination may be not continued;
4. determining whether the subscription type has been present, that is, further determining whether there is a collection task, which has a subscription type consistent with the subscription type in the first subscription request or contains the subscription type in the first subscription request, in the collection tasks, which are determined in the previous three steps (i.e., the determination results of the previous three steps are all "presence/yes"), if not, it indicates that there is no coincident collection task, and thus the following determination may be not continued;
5. determining whether the subscription element has been present, that is, further determining whether there is a collection task, which has a subscription element consistent with the subscription element in the first subscription request or contains the subscription element in the first subscription request, in the collection tasks, which are determined in the previous four steps (i.e., the determination results of the previous four steps are all "presence/yes"), if not, it indicates that there is no coincident collection task, and thus the following determination may be not continued;
6. determining whether the subscription parameter has been present, that is, further determining whether there is a collection task, which has a subscription parameter consistent with the subscription parameter in the first subscription request or contains the subscription parameter in the first subscription request, in the collection tasks, which are determined in the previous five steps (i.e., the determination results of the previous five steps are all "presence/yes"), if not, it indicates that there is no coincident collection task, and thus the following determination may be not continued; and
7. determining whether the subscription time period has been present, that is, determining whether there is a collection task, which includes the subscription time period (i.e., the first time period) in the first subscription request, in the collection tasks, which are determined in all previous steps (i.e., the determination results of all previous steps are all "presence/yes"), and if so, the collection task is a coincident collection task.

Of course, other determination sequences may also be used, as long as it may be finally determined whether there is a coincident collection task. The determination sequence herein refers to a sequence of performing related determination on the list of subscription data, the type of subscription network element, the subscription range, the subscription object, the subscription type, the subscription element, the subscription parameter and the subscription time period.

S103, in a case where there is a coincident collection task, a data stream is acquired according to the coincident collection task, and the first data is acquired from the data stream and sent to the first subscription end.

In a case where the network element manager determines that there is a coincident collection task currently, the network element manager does not need to establish a new collection task (i.e., the first collection task), and only needs to acquire (or filter out), from the data stream collected from the coincident collection task, a part belonging to the first data when the coincident collection task starts collecting data, and sends the part to the first subscription end.

Of course, once all collection tasks including the coincident collection task are completed, the corresponding collection tasks are deleted.

For example, the network element manager receives a subscription request 1 at a previous moment, and the unprocessed subscription request only includes the subscription request 1, and the subscription request 1 is as follows.

| | |
|---|---|
| List of subscription data | Sub-network ID=1, and network element ID=256 |
| Type of subscription network element | eNodeB |
| Subscription range | Wireless module ID=1 of the 256# network element, and TDD cell ID=1 |
| Subscription time period | startTime: 20200229 10:00:00 endTime: 20200229 11:00:00 |
| Subscription object | Cell |
| Subscription type | Signal |
| Subscription element | S1/UU/X2 |
| Subscription parameter | The parameter is a tracking depth, and the value is a maximum level |

A collection task 1 established according to the subscription request 1 is as follows.

| | |
|---|---|
| Task start time and end time | startTime: 20200229 10:00:00 endTime: 20200229 11:00:00 |
| Specific task object | Wireless module ID=1 of the 256# network element of eNodeB, and TDD cell ID=1 |
| Task type | signal |
| Task collection element | S1/UU/X2 |
| Task parameter | Tracking depth: maximum |

The first subscription request is as follows.

| | |
|---|---|
| List of subscribed data | Sub-network ID=1, network element ID=256 |
| Type of subscription network element | eNodeB |
| Subscription range | Wireless module ID=1 of the 256# network element, and TDD cell ID=1 |
| Subscription time period | startTime: 20200229 10:00:00 endTime: 20200229 10:30:00 |
| Subscription object | cell |
| Subscription type | signal |
| Subscription element | S1/UU/X2 |
| Subscription parameter | The parameter is a tracking depth, and the value is a maximum level |

The startTime and the endTime represent the start and end times of the subscription, respectively, and the first time period is therebetween.

By means of comparing the list of subscription data, the type of subscription network element, the subscription range, the subscription object, the subscription type, the subscription element, the subscription parameter and the subscription time period, it is found that the data requested to be collected by the first subscription request is a part of the data requested to be collected by the subscription request 1, which is previously received by the network element manager, therefore, the corresponding collection task 1 is a coincident collection task, that is, no new collection task needs to be established for the first subscription request, and only corresponding data needs to be acquired from the data collected by the collection task 1 and is sent to the first subscription end.

S104, in a case where there is no coincident collection task, a first collection task is generated according to the first subscription request, the first collection task is used for requesting to collect the first data, a data stream is acquired according to at least the first collection task, the first data is acquired from the data stream and sent to the first subscription end.

In a case where the network element manager determines that there is no coincident collection task currently, the network element manager needs to generate the first collection task according to the first subscription request, and the first collection task is used for requesting to collect at least part of the first data. When the first collection task requests to collect all the first data, the network element manager collects data according to the first collection task, acquires the first data from the data stream that is acquired according to the first collection task, and sends the first data to the first subscription end. When the first collection task requests to collect a part of the first data instead of all the first data, the network element manager not only needs to acquire the part of the first data from the data stream that is acquired and collected according to the first collection task, but also needs to acquire (or filter out) the collected other parts of the first data from the data stream that is acquired according to the other collection tasks, so as to acquire complete first data and to send the first data to the first subscription end.

In some related arts, if different service modules require the same data, for example, both a service module A and a service module B require data D, both the service module A and the service module B transmit data collection tasks for collecting the data D to a corresponding network element, and since the corresponding network element receives the two data collection tasks, although the data requested to be collected is the same, the data still needs to be collected twice and is respectively sent to the service module A and the service module B, such that the repeated collection of the data causes a waste of network bandwidths.

In the data collection method of the embodiments of the present disclosure, when a new subscription request is received, the repeated collection of the data is reduced by means of determining whether data predetermined by the subscription request is repeated with data predetermined by the previously received subscription request, thereby avoiding the waste of network resources.

In some embodiments, referring to Fig. 2, the generating the first collection task according to the first subscription request (S104) may include S1041 to S1043.

S1041, it is determined whether there is an overlapping collection task currently, the first data includes overlapping data that belongs to data requested to be collected by the overlapping collection task, and difference data that does not belong to the data requested to be collected by the overlapping collection task.

In a case where the network element manager does not discover the coincident collection task in the established collection tasks, the network element manager determines, according to the first subscription request, whether there is an overlapping collection task in the currently established collection tasks.

The overlapping collection task refers to that the data requested to be collected by the collection task overlaps with the first data, that is, there is data in the first data, which is included in the data requested to be collected by the overlapping collection task, and there is also data in the first data, which is not included in the data requested to be collected by the overlapping collection task.

The data in the first data, which is included in the data requested to be collected by the overlapping collection task, is the overlapping data, and the data in the first data, which is not included in the data requested to be collected by the overlapping collection task, is the difference data, and the overlapping data and the difference data together form the complete first data.

The determining whether there is the overlapping collection task currently may include: determining whether there is a collection task in which each the list of subscription data, the type of subscription network element, the subscription range, the subscription object, the subscription type, the subscription element, the subscription parameter and the subscription time period of the data requested to be collected by the collection task is consistent or overlaps with the corresponding one of the list of subscription data, the type of subscription network element, the subscription range, the subscription object, the subscription type, the subscription element, the subscription parameter and the subscription time period in the first subscription request.

In an embodiment, the determination sequence of determining whether there is the overlapping collection task currently may be consistent with the determination sequence of determining whether there is the coincident collection task in S102.

The determination sequence herein refers to a sequence of performing related determination on the list of subscription data, the type of subscription network element, the subscription range, the subscription object, the subscription type, the subscription element, the subscription parameter and the subscription time period.

S1042, in a case where there is an overlapping collection task, a first collection task is created for requesting to collect the difference data, a data stream is acquired according to the overlapping collection task and the first collection task, and the first data is acquired from the data stream and sent to the first subscription end.

In a case where the network element manager determines that there is an overlapping collection task, the network element manager creates the first collection task, and the first collection task is used for requesting to collect a part of the first data, which is not included in the data requested to be collected by the overlapping collection task, that is, the difference data. When the first collection task starts collecting data, the network element manager acquires the difference data (i.e., all collected data) from the data stream that is collected and acquired according to the first collection task, and sends the difference data to the first subscription end. When the overlapping collection task starts collecting data, the network element manager acquires (or filters out), from the data stream that is acquired according to the overlapping collection task, the data in the first data, which is included in the data requested to be collected by the overlapping collection task, that is, the overlapping data, and sends the overlapping data to the first subscription end.

Of course, there may be a plurality of overlapping collection tasks, the data requested to be collected by the plurality of overlapping collection tasks respectively include the data belonging to the first data (i.e., the overlapping data), and these overlapping data may just form all the first data, that is, a plurality of pieces of overlapping data may be combined into the complete first data, so that there is no need to create the first collection task, and it is only necessary to acquire the overlapping data from the data streams that are acquired according to these overlapping collection tasks, when these overlapping collection tasks start collecting data, and all these pieces of overlapping data are sent to the first subscription end.

For example, the network element manager receives a subscription request 2 at a previous moment, and the unprocessed subscription request only includes the subscription request 2, and the subscription request 2 is as follows.

| | |
|---|---|
| List of subscription data | Sub-network ID=1, and network element ID=256 |
| Type of subscription network element | eNodeB |
| Subscription range | Wireless module ID=1 of the 256# network element, and TDD cell ID=1 |
| Subscription time period | startTime: 20200229 10:00:00 endTime: 20200229 11:00:00 |
| Subscription object | cell |
| Subscription type | signal |
| Subscription element | S1/UU/X2 |
| Subscription parameter | The parameter is a tracking depth, and the value is a maximum level |

A collection task 2 established according to the subscription request 2 is as follows.

| | |
|---|---|
| Task start time and end time | startTime: 20200229 10:00:00 endTime: 20200229 11:00:00 |
| Specific task object | Wireless module ID=1 of the 256# network element of eNodeB, and TDD cell ID=1 |
| Task type | signal |
| Task collection element | S1/UU/X2 |
| Task parameter | Tracking depth: maximum |

The first subscription request is as follows.

| | |
|---|---|
| List of subscription data | Sub-network ID=1, and network element ID=256; and sub-network ID=1, and network element ID=257 |
| Type of subscription network element | eNodeB |
| Subscription range | Wireless module ID=1 of the 256# network element, TDD cell ID=1, wireless module ID=1 of the No. 257 network element, TDD cell ID=1, wireless module ID=1, and TDD cell ID=2 |
| Subscription time period | startTime: 20200229 10:00:00 endTime: 20200229 10:30:00 |
| Subscription object | cell |
| Subscription type | signal |
| Subscription element | S1/UU/X2 |
| Subscription parameter | The parameter is a tracking depth, and the value is a maximum level |

By means of comparing the list of subscription data, the type of subscription network element, the subscription range, the subscription object, the subscription type, the subscription element, the subscription parameter and the subscription time period, it is found that the data requested to be collected by the first subscription request is a part of the data requested to be collected by the subscription request 2, which is previously received by the network element manager, therefore, the corresponding collection task 2 is an overlapping collection task.

Meanwhile, the first collection task needs to be collected, the first collection task is used for requesting to collect data in the first data, which does not belong to the data requested to be collected by the overlapping collection task, that is, the difference data, and correspondingly, the first collection task is as follows.

| | |
|---|---|
| Task start time and end time | startTime: 20200229 10:00:00 endTime: 20200229 11:00:00 |
| Specific task object | Wireless module ID=1 of the No. 257 network element of eNodeB, TDD cell ID=1, wireless module ID=1, and TDD cell ID=2 |
| Task type | signal |
| Task collection element | S1/UU/X2 |
| Task parameter | Tracking depth: maximum |

When the overlapping collection task (i.e., the collection task 2) starts collecting data, the overlapping data is acquired from the data stream that is acquired according to the collection task 2, and the overlapping data is sent to the first subscription end. Apparently, when the first collection task starts collecting data, the data that is collected and acquired according to the first collection task also needs to be sent to the first subscription end.

S1043, in a case where there is no overlapping collection task, a first collection task for requesting to collect the first data is created, a data stream is acquired according to the first collection task, and the first data is acquired from the data stream and sent to the first subscription end.

In a case where the network element manager determines that there is no overlapping collection task, the network element manager needs to create the first collection task, and the first collection task is used for requesting to collect all the first data. When the first collection task starts collecting data, the first data is acquired from the data stream that is acquired according to the first collection task, and is sent to the first subscription end.

For example, the network element manager receives a subscription request 3 at a previous moment, and the unprocessed subscription request only includes the subscription request 3. The subscription request 3 is as follows.

| | |
|---|---|
| List of subscription data | Sub-network ID=1, and network element ID=45 |
| Type of subscription network element | gNB |
| Subscription range | Wireless module ID=1 of the 45# network element |
| Subscription time period | startTime: 20200229 10:00:00 endTime: 20200306 10:30:00 |
| Subscription object | cell |
| Subscription type | signal |
| Subscription element | S1/UU/X2 |
| Subscription parameter | The parameter is a tracking depth, and the value is a maximum level |

A collection task 3 established according to the subscription request 3 is as follows.

| | |
|---|---|
| Task start time and end time | startTime: 20200229 10:00:00 endTime: 20200229 10:30:00 |
| Specific task object | Wireless module ID=1 of the 45# network element of eNodeB |
| Task type | signal |
| Task collection element | S1/UU/X2 |
| Task parameter | Tracking depth: maximum |

The first subscription request is as follows.

| | |
|---|---|
| List of subscription data | Sub-network ID=1, and network element ID=45 |
| Type of subscription network element | gNB |
| Subscription range | Wireless module ID=1 of the 45# network element |
| Subscription time period | startTime: 20200229 10:00:00 endTime: 20200306 10:30:00 |
| Subscription object | Wireless module |
| Subscription type | MR (measurement report) |
| Subscription element | UE_PDCP_PACKET/RNLU_UE_SCCTPUTSTC/UE_TPUTSTC |
| Subscription parameter | The report period is one minute |

By means of comparing the list of subscription data, the type of subscription network element, the subscription range, the subscription object, the subscription type, the subscription element, the subscription parameter and the subscription time period, it is found that the data requested to be collected by the first subscription request does not overlap with or is completely different from the data requested to be collected by the subscription request, which is previously received by the network element manager, so that the first collection task needs to be established according to the first subscription request, and the first collection task may be as follows.

| | |
|---|---|
| Task start time and end time | startTime: 20200229 10:00:00 endTime: 20200229 10:30:00 |
| Specific task object | Wireless module ID=1 of the 45# network element of eNodeB |
| Task type | MR |
| Task collection element | UE_PDCP_PACKET/RNLU_UE_SCCTPUTSTC/UE_TPUTSTC |
| Task parameter | The report period is one minute |

When the first collection task starts collecting data, the network element manager acquires the first data from the data stream that is acquired according to the first collection task, and sends the first data to the first subscription end.

By means of determining whether there is an overlapping collection task, the repeated collection of the data is further reduced. That is, in a case where a part of the first data is collected by other collection tasks, only the remaining part of the first data needs to be collected, thereby further reducing the waste of network resources caused by the repeated collection of the same data.

In some embodiments, the acquiring the first data from the data stream, and sending the first data to the first subscription end includes: decoding the data stream, acquiring a data entity including the first data, acquiring the first data from the data entity, and sending the first data to the first subscription end.

After receiving the data stream that is acquired according to the collection task (all collection tasks including the coincident collection task, the overlapping coincident collection task and the first collection task), the network element manager needs to decode the data stream. This is because the data stream acquired according to the collection task is transmitted through a protocol, so that the collected data stream has a protocol header. The collected data stream needs to be decoded, and the protocol header of the data stream needs to be removed, so as to acquire the remaining data part, that is, the data entity. Since the data stream collected according to the collection task includes the first data, the data entity naturally also includes the first data. After the data entity is acquired, the first data is acquired from the data entity and is sent to the first subscription end.

For example, the specific composition of the data collected by the collection task is shown in the following table.

| | | | | | |
|---|---|---|---|---|---|
| Protocol header | Network element platform header | Product identifier header | Service information header | Data body 1 | Data body 2 |

The decoded data entity is shown in the following table.

| | | | | |
|---|---|---|---|---|
| Network element platform header | Product identifier header | Service information header | Data body 1 | Data body 2 |

By means of uniformly decoding the data, the waste of network resources caused by repeated decoding after different subscription ends receive the same data is avoided.

In some embodiments, the first subscription request includes a data type.

The decoding the data stream and acquiring the data entity including the first data includes: decoding the data stream and acquiring the data entity of which the data type is the data type in the first subscription request, and the data entity includes the first data.

The first subscription request includes the data type, and the data type of the data required by a general service module (i.e., the subscription end) mainly includes three types, that is, an original code stream (i.e., the remaining data entity after the protocol header is removed), summary decoding data (a data entity obtained after summary decoding is performed on the original code stream, that is, the network element platform header, the product identifier header and the service information header need to be decoded, and the data body part does not need to be decoded), and detailed decoding data (a data entity obtained after detailed decoding is performed on the summary decoding data, that is, all parts including the data body need to be decoded).

Therefore, the data type in all subscription requests is one of the three data types, and the data type in the first subscription request is certainly one of the three data types.

After acquiring the data stream according to the collection task (all collection tasks including the coincident collection task, the overlapping collection task and the first collection task), the network element manager decodes the data stream according to the data type in the corresponding subscription request, acquires the data entity of which the data type is consistent with the data type in the corresponding subscription request, and sends the data entity to the corresponding subscription end. For example, the network element manager correspondingly decodes the data stream acquired according to the first collection task, acquires the data entity of which the data type is the data type in the first subscription request, and sends the data entity to the first subscription end.

In an embodiment, when the data type in the first subscription request is summary decoding data, in a case where there is a coincident collection task, the data stream acquired according to the first collection task is decoded, a data entity of which the data type is the summary decoding data is acquired, the first data is obtained from the obtained data entity, and the first data is sent to the first subscription end; in a case where there are an overlapping collection task and a first collection task, the data stream acquired according to the overlapping collection task and the first collection task is decoded, the data entity of which the data type is the summary decoding data is acquired, the first data is obtained from the obtained data entity, and the first data is sent to the first subscription end; and in a case where there is only the first collection task, the data stream acquired according to the first collection task is decoded, the data entity of which the data type is the summary decoding data is acquired, the obtained data entity is the first data, and the data entity is sent to the first subscription end.

The network element manager uniformly decodes the data, decodes the data of various required data types in sequence, and sends the data as needed, so that the data management and data sending are facilitated.

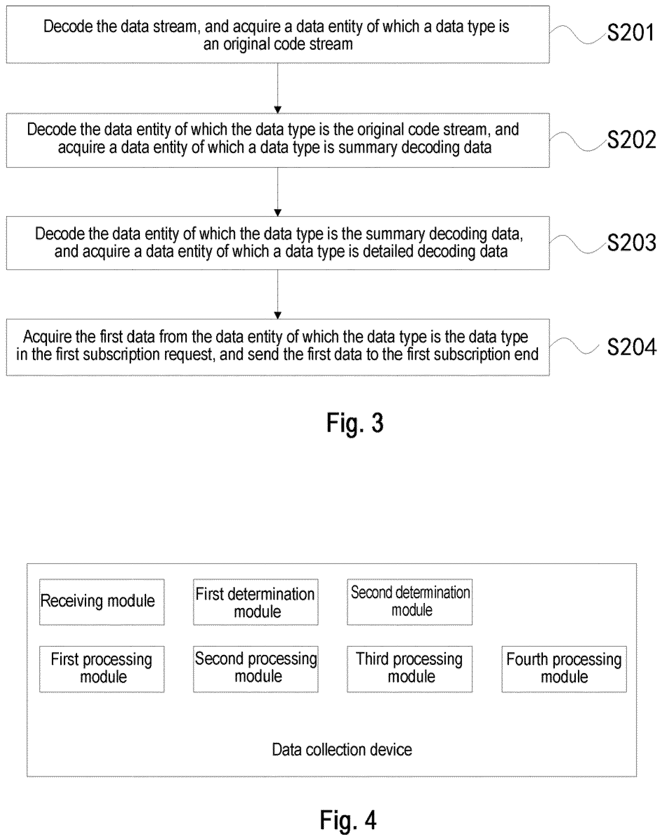

In some embodiments, referring to Fig. 3, the decoding the data stream, acquiring the data entity of which the data type is the data type in the first subscription request, the data entity including the first data, acquiring the first data from the data entity, and sending the first data to the first subscription end may include the following S201 to S204.

S201, the data stream is decoded, and a data entity of which the data type is an original code stream is acquired.

S202, the data entity of which the data type is the original code stream is decoded, and a data entity of which the data type is summary decoding data is acquired.

S203, the data entity of which the data type is the summary decoding data is decoded, and a data entity of which the data type is detailed decoding data is acquired.

S204, the first data is acquired from the data entity of which the data type is the data type in the first subscription request, and the first data is sent to the first subscription end.

The data type in the subscription request is one of the original code stream, the summary decoding data and the detailed decoding data, the data entity of which the data type is the original code stream is a remaining data entity after the protocol header is removed, the data entity of which the data type is the summary decoding data is obtained by decoding the network element platform header, the product identification header, the service information head and other parts on the basis of the data entity of which the data type is the original code stream, and similarly, the data entity of which the data type is detailed decoding data is obtained by decoding the data body on the basis of the data entity of which the data type is the summary decoding data.

Therefore, the summary decoding data may be obtained by performing decoding on the basis of the original code stream, and the detailed decoding data may be obtained by further decoding the summary decoding data. If it is necessary to obtain the data entity of which the data type is the summary decoding data, it is necessary to perform decoding to obtain the data entity of which the data type is the original code stream at first, and if it is necessary to obtain the data entity of which the data type is the detailed decoding data, it is necessary to perform decoding to obtain the data entity of which the data type is the summary decoding data.

After the protocol header is removed from the data stream acquired according to the collection task (e.g., the coincident collection task), so as to obtain the data entity of which the data type is the original code stream, the obtained original code stream may be stored, and it is determined whether there is a subscription request, which subscribes to a part of or all of the data and in which the data type is the summary decoding data or the detailed decoding data (for example, it is determined whether the data type of the first subscription request is the summary decoding data or the detailed decoding data). If so (i.e., the data type in the first subscription request is the summary decoding data or the detailed decoding data), the data entity of which the data type is the original code stream is further decoded, so as to obtain the data entity of which the corresponding data type is the summary decoding data, and the data entity is stored; and then, it is determined whether there is a subscription request, which subscribes to a part of or all of the data and in which the data type is the detailed decoding data; and if so, the data entity of which the data type is the summary decoding data is further decoded, so as to obtain the data entity of which the corresponding data type is the detailed decoding data, and the data entity is stored. The network element manager selects a corresponding data entity from the stored data entities according to different subscription requests, and sends the corresponding data entity to the subscription end.

For example, the network element manager receives a subscription request 4 at a previous moment, and the unprocessed subscription request only includes the subscription request 4, and the subscription request 4 is as follows.

| | |
|---|---|
| List of subscription data | Sub-network ID=1, and network element ID=45 |
| Type of subscription network element | gNB |
| Subscription range | Wireless module ID=1 of the 45# network element |
| Subscription time period | startTime: 20200229 10:00:00 endTime: 20200306 10:30:00 |
| Subscription object | Cell |
| Subscription type | MTS (monitoring test) and SpectrumScan (spectrum scan) |
| Subscription element | MTS: CELL_UL_BASE_INF0/CELL_DL_BASE_INF0; SpectrumScan: SCH_SL0T_NI |
| Subscription parameter | None |
| Data type | Detailed decoding data |

A collection task 4 established according to the subscription request 4 is as follows.

| | |
|---|---|
| Task start time and end time | startTime: 20200229 10:00:00 endTime: 20200229 10:30:00 |
| Specific task object | Wireless module ID=1 of the 45# network element of eNodeB |
| Task type | MTS and SpectrumScan |
| Task collection element | MTS: CELL_UL_BASE_INF0/CELL_DL_BASE_INF0; SpectrumScan: SCH_SL0T_NI |
| Task parameter | None |

The first subscription request is as follows.

| | |
|---|---|
| List of subscription data | Sub-network ID=1, and network element ID=45 |
| Type of subscription network element | gNB (base station) |
| Subscription range | Wireless module ID=1 of the 45# network element |
| Subscription time period | startTime: 20200229 10:00:00 endTime: 20200306 10:30:00 |
| Subscription object | Cell |
| Subscription type | MTS |
| Subscription element | CELL_UL_BASE_INF0/CELL_DL_BASE_INF0 |
| Subscription parameter | None |
| Data type | Summary decoding data |

By means of comparing the list of subscription data, the type of subscription network element, the subscription range, the subscription object, the subscription type, the subscription element, the subscription parameter and the subscription time period, it is found that the data requested to be collected by the first subscription request is a part of the data requested to be collected by the subscription request 4, which is previously received by the network element manager, so that the corresponding collection task 4 is a coincident collection task.

The data type included in the subscription request 4 corresponding to the coincident collection task is the detailed decoding data, and thus after the corresponding data stream is collected, that is, after the data stream of the monitoring test data and the spectrum scanning data of the wireless module ID=1 of the 45# network element of eNodeB within a time period from 10: 00 to 10: 30 is collected, the protocol header is removed to obtain the corresponding data entity, and the data entity is stored in a data cache.

If a kafka message queue is used as the data cache, the data entity obtained by removing the protocol header may be stored in topic1 of kafka. It is determined whether there is a subscription request of which the data type is the summary decoding data or the detailed decoding data in all subscription requests (i.e., the subscription request 4 and the first subscription request) that subscribe to any part of the data entity.

If so, (the data type in the subscription request 4 is the detailed decoding data, and the data type in the first subscription request is the summary decoding data), the data is pulled from the topic1 of kafka and sent to the next computing node (e.g., a BriefDecodeEvent node), summary decoding is performed on the data on this node, and it is determined whether there is a subscription request of which the data type is the summary decoding data in all subscription requests (i.e., the subscription request 4 and the first subscription request) that subscribe to any part of the data entity.

If there is a subscription request of which the data type is the summary decoding data in all subscription requests (i.e., the subscription request 4 and the first subscription request) that subscribe to any part of the data entity, the data entity obtained by this node is stored in a topic 2 of the kafka, and it is determined whether there is a subscription request of which the data type is the detailed decoding data in all subscription requests (i.e., the subscription request 4 and the first subscription request) that subscribe to any part of the data entity; and if so, the decoded data stream is sent to the next computing node (e.g., a distributorBolt distribution node) for detailed decoding, so as to obtain a data entity of which the data type is the detailed decoding data, and the obtained data entity is stored in a topic3 of the kafka.

If there is no subscription request of which the data type is the summary decoding data in all subscription requests (i.e., the subscription request 4 and the first subscription request) that subscribe to any part of the data entity, the data pulled from the topic1 of the kafka may be directly sent to the next computing node (e.g., the distributorBolt distribution node) for detailed decoding, so as to obtain a data entity of which the data type is the detailed decoding data, and the obtained data entity is stored in the topic3 of the kafka.

The network element manager may pull data from different topics of the kafka according to different subscription requests, and send the data to the corresponding subscription end; and the subscription end may also directly pull the desired data from different topics of the kafka.

Apparently, since the top has all data entities (e.g., the data entity corresponding to the data stream that is acquired according to the coincident collection task) of which the data type is the original code stream, while the subscription end may only need a part of data (i.e., the data subscribed by the first subscription request), the data may need to be filtered, and the corresponding data is sent to the corresponding subscription end. For example, the data entity acquired by decoding the data stream that is acquired according to the coincident collection task is filtered, the first data is filtered out, and the first data is sent to the first subscription end.

In some related arts, if different service modules require the same data, for example, both the service module A and the service module B require the data D, since the data collected by the network element is in a fixed format, the service module A and the service module B need to respectively decode the data D after the data D collected by the network element is respectively sent to the service module A and the service module B, which is essentially equivalent to performing twice (repeated) decoding on the data D, such that the repeated decoding of the same data results in a waste of operation resources.

The embodiments of the present disclosure avoid the repeated decoding of the same data, and in addition, the embodiments of the present disclosure avoid the need to re-decode the data of which the data type is the original code stream when the data of which the data type is the detailed decoding data is needed, thereby avoiding resource waste caused by repeated decoding.

In some embodiments, after the data stream is decoded, the data entity including the first data is acquired, and the first data is acquired from the data entity and sent to the first subscription end, the method further includes: sending the data entity to at least one subscription end other than the first subscription end.

In an embodiment, the first data may also be subscribed by other subscription ends, for example, the subscription request for creating the coincident collection task apparently subscribes to the data including the first data, therefore, the acquired data entity may also be sent to the subscription end, which creates the subscription request of the coincident collection task.

In addition, the subscription ends other than the first subscription end may subscribe to the data including the first data, but the data type in the subscription requests thereof may not be consistent with the data type in the first subscription request, at this time, the acquired data stream needs to be correspondingly decoded, the data entity of which the data type is the data type in the corresponding subscription request is acquired, and the acquired data entity is sent to the corresponding subscription end.

If the data type in the subscription request for creating the coincident collection task is consistent with the data type in the first subscription request, there is no need to decode the data stream that is acquired according to the coincident collection task again. Only one-time decoding is needed, and the corresponding data entity is sent to the corresponding subscription end, thereby avoiding the waste of network resources caused by repeated decoding.

Similarly, if the data type in the subscription request for creating the overlapping collection task is consistent with the data type in the first subscription request, there is no need to perform twice decoding on the data stream that is acquired according to the overlapping collection task, only one-time decoding is needed, and the corresponding data entity is sent to the corresponding subscription end, thereby avoiding the waste of network resources caused by repeated decoding. Or, when the data type in the subscription request received at a future time point relative to the current time point is consistent with the data type in the first subscription request, and the subscribed data includes the first data, there is no need to perform re-decoding, and it is only necessary to send the first data to the subscription end, thereby avoiding the waste of network resources caused by repeated decoding.

In a second aspect, referring to Fig. 4, the embodiments of the present disclosure provide a network element manager, including a receiving module, a first determination module, a first processing module and a second processing module.

The receiving module is configured to receive a first subscription request from a first subscription end. The first subscription request is used for subscribing to first data, and the first data is specific data within a future first time period.

The first determination module is configured to determine whether there is a coincident collection task currently. The data requested to be collected by the coincident collection task includes at least the first data.

The first processing module is configured to, when there is a coincident collection task, acquire a data stream according to the coincident collection task, acquire the first data from the data stream, and send the first data to the first subscription end.

The second processing module is configured to, when there is no coincident collection task, generate a first collection task according to the first subscription request, where the first collection task is used for requesting to collect the first data, acquire a data stream according to at least the first collection task, acquire the first data from the data stream, and send the first data to the first subscription end.

In some embodiments, the network element manager further includes: a second determination module, a third processing module, and a fourth processing module.

The second determination module is configured to determine whether there is an overlapping collection task currently. The first data includes overlapping data that belongs to data requested to be collected by the overlapping collection task, and difference data that does not belong to the data requested to be collected by the overlapping collection task.

The third processing module is configured to, when there is an overlapping collection task, create a first collection task for requesting to collect the difference data, acquire a data stream according to the overlapping collection task and the first collection task, acquire the first data from the data stream, and send the first data to the first subscription end.

The fourth processing module is configured to, when there is no overlapping collection task, create a first collection task for requesting to collect the first data, acquire a data stream according to the first collection task, acquire the first data from the data stream, and send the first data to the first subscription end.

In some embodiments, the acquiring the first data from the data stream, and sending the first data to the first subscription end includes: decoding the data stream, acquiring a data entity including the first data, acquiring the first data from the data entity, and sending the first data to the first subscription end.

In some embodiments, the first subscription request includes a data type.

The decoding the data stream and acquiring the data entity including the first data includes: decoding the data stream, and acquiring the data entity of which the data type is the data type in the first subscription request, where the data entity includes the first data.

By using the network element manager of the embodiments of the present disclosure, when a new subscription request is received, by means of determining whether data pre-subscribed by the subscription request is repeated with data subscribed by the previously received subscription request, the repeated collection of the data is reduced, thereby avoiding the waste of network resources.

Those ordinary skilled in the art may understand that, functional modules/units in all or some steps and system or apparatuses disclosed above may be implemented as software, firmware, hardware, and appropriate combinations thereof.

In a hardware implementation, the division between the functional modules/units mentioned in the above description does not necessarily correspond to the division of physical components; for example, one physical component may have a plurality of functions, or one function or step may be executed by several physical components in a cooperative manner.

Some physical components or all physical components may be implemented as software executed by a processor (e.g., a central processing unit (CPU), a digital signal processor, or a microprocessor) or implemented as hardware, or implemented as an integrated circuit, such as an application specific integrated circuit. Such software may be distributed on a computer-readable medium, which may include a computer storage medium (or a non-transitory medium) and a communication medium (or a transitory medium). As is well known to those ordinary skilled in the art, the term "computer storage medium" includes volatile and non-volatile media, and removable and non-removable media, which are implemented in any method or technology for storing information (e.g., computer-readable instructions, data structures, program modules, or other data). The computer storage medium includes, but is not limited to, a random access memory (RAM, more specifically such as SDRAM and DDR), a read-only memory (ROM), an electrically erasable programmable read-only memory (EEPROM), a flash memory (FLASH) or other disk memories; a compact disc read-only memory (CD-ROM), a digital versatile disk (DVD), or another optical disk memories; a magnetic box, a magnetic tape, a magnetic disk storage, or other magnetic memories; and any other media, which may be used for storing desired information and may be accessed by a computer. In addition, it is well known to those ordinary skilled in the art that, the communication medium typically contains computer-readable instructions, data structures, program modules, or other data in modulated data signals such as carriers or other transport mechanisms, and may include any information delivery medium.

The present disclosure has disclosed examples, and although specific terms are employed, they are only used and should only be construed as general illustrative meanings and are not intended to be limiting. It will be apparent to those skilled in the art that, unless expressly stated otherwise, features, characteristics and/or elements described in combination with particular embodiments may be used alone, or may be used in combination with features, characteristics and/or elements described in combination with other embodiments. Accordingly, it will be understood by those skilled in the art that, changes in various forms and details may be made without departing from the scope of the present disclosure as set forth in the appended claims.

## Claims

1. A data collection method, applicable to a network element manager and comprising:
receiving, from a first subscription end, a first subscription request being used for subscribing to first data, and the first data being specific data within a future first time period;
determining whether there is a coincident collection task currently, data requested to be collected by the coincident collection task comprising at least the first data;
in a case where there is a coincident collection task, acquiring a data stream according to the coincident collection task, acquiring the first data from the data stream, and sending the first data to the first subscription end; and
in a case where there is no coincident collection task, generating a first collection task according to the first subscription request, the first collection task being used for requesting to collect the first data, acquiring a data stream according to at least the first collection task, acquiring the first data from the data stream, and sending the first data to the first subscription end.

2. The method according to claim 1, wherein generating the first collection task according to the first subscription request comprises:
determining whether there is an overlapping collection task currently, the first data comprising overlapping data that belongs to data requested to be collected by the overlapping collection task, and difference data that does not belong to the data requested to be collected by the overlapping collection task;
in a case where there is an overlapping collection task, creating a first collection task for requesting to collect the difference data, acquiring a data stream according to the overlapping collection task and the first collection task, acquiring the first data from the data stream, and sending the first data to the first subscription end; and
in a case where there is no overlapping collection task, creating a first collection task for requesting to collect the first data, acquiring a data stream according to the first collection task, acquiring the first data from the data stream, and sending the first data to the first subscription end.

3. The method according to claim 1 or 2, wherein acquiring the first data from the data stream, and sending the first data to the first subscription end comprises:
decoding the data stream, acquiring a data entity comprising the first data, acquiring the first data from the data entity, and sending the first data to the first subscription end.

4. The method according to claim 3, wherein the first subscription request comprises a data type; and
decoding the data stream and acquiring the data entity comprising the first data comprises:
decoding the data stream, and acquiring the data entity of which a data type is the data type in the first subscription request, the data entity comprising the first data.

5. The method according to claim 4, wherein decoding the data stream and acquiring the data entity of which the data type is the data type in the first subscription request comprises:
decoding the data stream, and acquiring a data entity of which a data type is an original code stream;
decoding the data entity of which the data type is the original code stream, and acquiring a data entity of which a data type is summary decoding data;
decoding the data entity of which the data type is the summary decoding data, and acquiring a data entity of which a data type is detailed decoding data; and
acquiring the first data from the data entity of which the data type is the data type in the first subscription request, and sending the first data to the first subscription end.

6. The method according to claim 3, further comprising:
after decoding the data stream, acquiring the data entity comprising the first data, acquiring the first data from the data entity, and sending the first data to the first subscription end,
sending the data entity to at least one subscription end other than the first subscription end.

7. A network element manager, comprising:
a receiving module, configured to receive a first subscription request from a first subscription end, the first subscription request being used for subscribing to first data, and the first data being specific data within a future first time period;
a first determination module, configured to determine whether there is a coincident collection task currently, data requested to be collected by the coincident collection task comprising at least the first data;
a first processing module configured to, when there is a coincident collection task, acquire a data stream according to the coincident collection task, acquire the first data from the data stream, and send the first data to the first subscription end; and
a second processing module configured to, when there is no coincident collection task, generate a first collection task according to the first subscription request, the first collection task being used for requesting to collect the first data, acquire a data stream according to at least the first collection task, acquire the first data from the data stream, and send the first data to the first subscription end.

8. The network element manager according to claim 7, wherein the network element manager further comprises:
a second determination module, configured to determine whether there is an overlapping collection task currently, the first data comprising overlapping data that belongs to data requested to be collected by the overlapping collection task, and difference data that does not belong to the data requested to be collected by the overlapping collection task;
a third processing module configured to, when there is an overlapping collection task, create a first collection task for requesting to collect the difference data, acquire a data stream according to the overlapping collection task and the first collection task, acquire the first data from the data stream, and send the first data to the first subscription end; and
a fourth processing module configured to, when there is no overlapping collection task, create a first collection task for requesting to collect the first data, acquire a data stream according to the first collection task, acquire the first data from the data stream, and send the first data to the first subscription end.

9. The network element manager according to claim 7 or 8, wherein acquiring the first data from the data stream and sending the first data to the first subscription end comprises:
decoding the data stream, acquiring a data entity comprising the first data, acquiring the first data from the data entity, and sending the first data to the first subscription end.

10. The network element manager according to claim 9, wherein the first subscription request comprises a data type; and
decoding the data stream and acquiring the data entity comprising the first data comprises:
decoding the data stream, and acquiring the data entity of which a data type is the data type in the first subscription request, the data entity comprising the first data.
